# EUROPEAN PATENT APPLICATION

(11) **EP 0 947 903 A1**
(43) Date of publication of application: **06.10.1999**
(21) Application number: 98124478.3
(22) Date of filing: 23.12.1998
(51) Int. Cl.: G05D 23/20, H05B 1/02, G01N 25/22, G01N 33/22, G01N 27/12, H01J 49/28

(54) **Temperature control system for film heater**

(30) Priority: 02.04.1998 US 54219
(71) Applicant: White Consolidated Industries, Inc., Cleveland Ohio 44111 (US)
(72) Inventor: Kallgren, Johan, 16869 Bromma (SE); Dishop, Steven, Bellefontaine, Ohio 43311 (US); Coates Donald A., 43085 Worthington, Ohio (US); Howell Terry, Ada, Ohio 45810 (US)
(74) Representative: Höchtl, Walter

(57) **Abstract**

A cook top having a simple, low cost heater control circuit which monitors changes in electrical resistance of a thin film heater that exhibits positive temperature coefficient (PTC) characteristics. The monitored resistance value, as a function of current drawn by the heater, is used to control power output to the heater.

## Description

### BACKGROUND OF THE INVENTION

The present invention relates to a temperature control system for a thin film resistive heater element used in a glass ceramic cook top. More specifically, the control system uses positive temperature coefficient characteristics of the heater as a temperature sensor to provide feedback to a temperature controller.

Typically, temperature control of a heater is accomplished with a controller that regulates the power delivered to the heater based on feedback received from a sensor attached to the heater. Usually, the sensor is a thermocouple or a resistive thermal device (RTD) attached to the heater with adhesive. In some cook top constructions, namely thin film heaters mounted on glass ceramic surfaces, these sensors are the source of problems. These problems include reliable long-term sensor attachment due to the smoothness of the heater film and thermal expansion differences between the adhesive and the heater. There is also the possibility of damage to the heater from the adhesive. Moreover, the sensor is capable of monitoring temperature in only the small area near the sensor. If a thermal load, such as a pot of water, is positioned above the sensor but only partially covers the heater, the uncovered portion of the heater may become overheated. This disadvantage may be overcome by using multiple sensors or by printing and firing a RTD sensor over a large portion of the heater. However, these solutions increase cost and manufacturing difficulty of the product while decreasing its reliability due to thermal expansion mismatch. Furthermore, sensors sometimes need to be electrically insulated from the heater. This requires a layer of electrical insulation to be applied to the heater. Again, adherence difficulties arise due to thermal expansion mismatch and the smoothness of thin film heaters. Crazing, the formation of minute cracks, during temperature cycling of the heater is also likely to result.

An alternative to using sensors is to use the heater as the RTD sensor itself. Some materials exhibit increases or decreases in electrical resistance with increasing temperature. If the change in electrical resistance is monitored, the power delivered to the heater may be regulated based on the result of the monitoring.

### BRIEF SUMMARY OF THE INVENTION

The present invention improves upon earlier designs by providing a cook top having a simple, low cost heater control circuit which monitors changes in electrical resistance of a thin film heater that exhibits positive temperature coefficient (PTC) characteristics. The monitored resistance valued as a function of current drawn by the heater, is used to control power output to the heater and, according to another aspect of the invention, limit the temperature of the heater.

According to the invention, the cook top includes a heater. The heater is electrically connected to receive power from a temperature controller. A current transducer is connected to the heater to monitor changes in electrical resistance of the heater that result as a function of the heater's temperature. The current transducer is also connected to the temperature controller to send a feedback signal corresponding to the change in resistance to the temperature controller.

According to a first embodiment of the invention, the current transducer is a resistive shunt having a resistor connected in parallel with an analog to digital (A/D) converter. The A/D converter provides the feedback signal. According to another aspect of the first embodiment, an optical coupler is connected between the A/D converter and the temperature controller. The optical coupler galvanically isolates the temperature controller.

According to a second embodiment of the invention, the current transducer is a current transformer.

According to another aspect of the invention, the heater is a fluorine or antimony doped tin dioxide thin film. According to another aspect of the invention the heater is secured to a glass ceramic surface.

According to yet another aspect of the invention, the cook top heater temperature is controlled by supplying power from a temperature controller to the heater, monitoring the current drawn by the heater and producing a corresponding feedback signal indicative of the temperature of the heater, and varying the power supplied to the heater using pulse width modulation based on the feedback signal. Furthermore, the cook top heater temperature may be limited.

### BRIEF DESCRIPTION OF THE SEVERAL VIEWS OF THE DRAWING

These and further features of the present invention will be apparent with reference to the following description and drawings, wherein:
FIG. 1 is a graph showing current as a function of temperature for a fluorine doped tin dioxide thin film heater;
FIG. 2 is a block diagram of a heater control circuit according to the present invention;
FIG. 3 is a circuit diagram of a heater control circuit according to a first embodiment of the present invention; and
FIG. 4 is a circuit diagram of a heater control circuit according to a second embodiment of the present invention.

### DETAILED DESCRIPTION OF THE INVENTION

In the detailed description which follows, identical components have been given the same reference numerals, and, in order to clearly and concisely illustrate the present invention, certain features may be shown in somewhat schematic form.

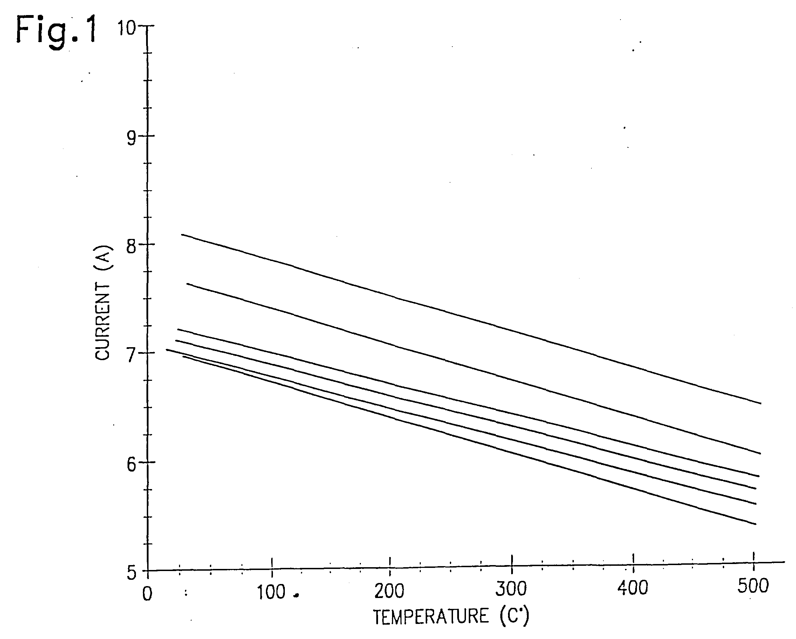

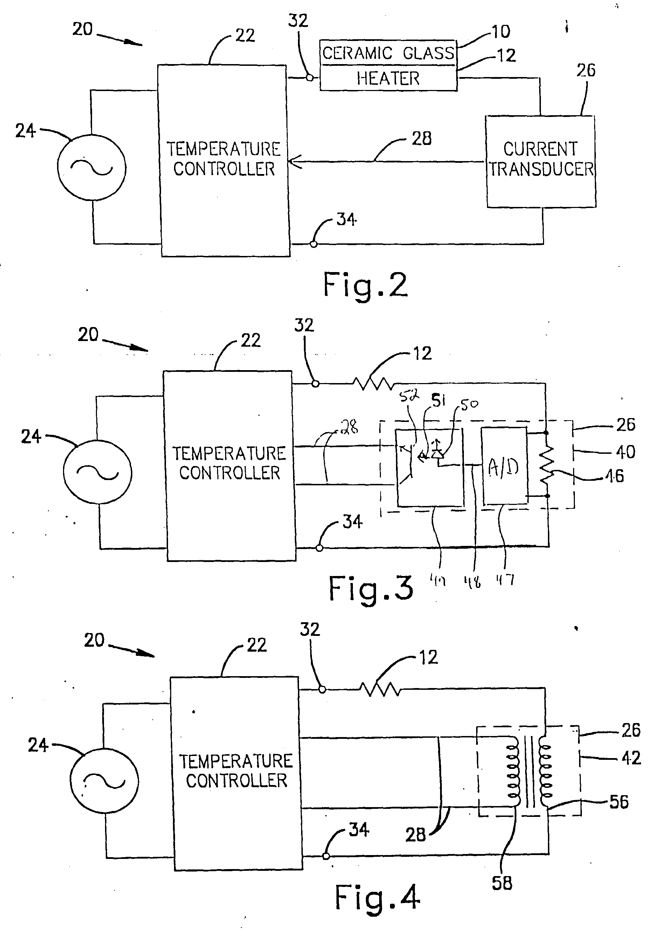

Referring to FIG. 2, a very inexpensive and energy efficient cook top for an electric range may be fabricated by applying a resistive film heater 12 directly to the underside of a glass ceramic cooking surface 10. The heater 12 may be a cermet based thick film or a doped metal oxide thin film. Preferably, the heater 12 is a fluorine (F) or antimony (Sb) doped tin dioxide (Sn0₂) thin film. The quantity of dopant is typically 0.1 to 0.5 percent by weight, but is not limited to this range. U.S. patent application serial no. 08/800,738 filed February 26, 1997 describes examples of thin film heaters and cook tops of this nature and is incorporated herein by reference. Referring to FIG. 1, a graph of the electrical current drawn by six sample Sn0₂ heaters is presented. As the graph indicates, there is a linear decrease in current when the sample heaters are heated from 80°C to 450°C. As one skilled in the art will appreciate, the decrease in current represents an increase in resistance of the heater 12 with increased temperature. In other words, the heater 12 has a positive temperature coefficient (PTC) equal to that of the slope of the resistance increase. The PTC value for the six sample heaters is very similar, with a standard deviation of only 0.02%.

It is possible to control the temperature of the heater 12 by taking advantage of the PTC characteristics of the heater 12. This is achieved by monitoring the current drawn by the heater 12. Referring back now to FIG. 2, a heater control circuit 20 according to the present invention is shown. A temperature controller circuit 22 is used to regulate the power delivered to the heater 12, thereby controlling the temperature of the heater 12. The temperature controller circuit 22 is preferably controlled by a microprocessor. The temperature controller 22 receives power from a voltage supply 24, which is typically 120 or 220 VAC from a standard household source.

The heater 12 is connected in series with a current transducer 26 used to monitor the current following through the heater 12 and to send a corresponding feedback signal to the temperature controller 22 over a feed-back connection 28. In order for the heater 12 to receive power, the heater 12 and current transducer 26 are connected to power supply outputs 32, 34 of the temperature controller 22. Since the current drawn by the heater 12 is directly proportional to the heater's 12 temperature, it is possible to program the microprocessor to control the temperature of the heater 12 based on the feedback signal provided by the current transducer 26. Temperature is regulated by controlling the power delivered to the heater 12, preferably by pulse width modulation of the voltage applied to the heater 12.

It has been found that to produce a reliable heater 12 that generates more than 2 W/cm² (13 W/sq. in), the temperature controller 22 preferably limits the heater 12 surface temperature to 375°C. The reason for this limitation `is that the resistivity of the heater 12 is not stable above 375°C. After 800 cycles of one hour on at 500°C and a half an hour off, the room temperature resistance of the heater 12 increases up to 40%. The microprocessor can easily be programmed to use the feedback signal produced by the current transducer 26 to limit the heater 12 temperature to 375°C. The 375°C limit does not degrade performance of the heater 12. Testing has shown that the time to boil 1 liter of water with and without the limitation is the same. This is because the steady state temperature of the ceramic glass 10 with a thermal load of 1 liter of water is approximately 350°C; Although a temperature limit of 375°C has been selected, a higher or lower temperature limit may be used, especially if a different heater 12 composition is used.

One skilled in the art will appreciate that there are a variety of simple and cost effective electrical components that can serve as the current transducer 26. Two components, namely a resistive shunt 40 and a current transformer 42, are particularly effective. FIG. 3 shows a heater control circuit 20 according to a first embodiment of the present invention wherein the current transducer 26 is a resistive shunt 40. The resistive shunt 40 is a resistor 46 connected in parallel with an analog to digital (A/D) converter 47. The A/D converter 47 has a serial output 48 that drives an optical coupler 49. The signal of the serial output 48 is proportional to the voltage across the resistor 46, which represents the current drawn by the heater 12, and constitutes the feedback signal. The optical coupler 49 has a diode 50 that produces light 51 in proportion to the feedback signal. The light 51 emanating from the diode 50 is received by and stimulates a phototransmitter 52 which provides a galvanically isolated feedback signal to the temperature controller 22 over the feedback connection 28. The use of the optical coupler 49 provides a galvanic isolation barrier between the temperature controller 22 and voltage supply 24 via the resistive shunt 40.

FIG. 4 shows a heater control circuit 20 according to a second embodiment of the present invention wherein the current transducer 26 is a current transformer 42. A primary winding 56 of the current transformer 42 is connected to the heater 12 and one of the power supply outputs 34. A secondary winding 58 is connected to the feedback connection 28. In this manner, current powering the heater 12 will induce a feedback signal in the secondary winding 58 which is sent to the temperature controller 22. The current of the feedback signal represents the current drawn by the heater and the temperature controller 22 controls the heater in response to this signal.

Although particular embodiments of the invention have been described in detail, it is understood that the invention is not limited correspondingly in scope, but includes all changes and modifications coming within the spirit and terms of the claims appended hereto.

## Claims

1. A heater control circuit comprising, a heater electrically connected to receive power from a temperature controller, and a current transducer connected to monitor changes in electrical resistance of the heater as a function of the heater's temperature and send a corresponding feedback signal to the temperature controller.

2. The circuit according to claim 1, wherein the current transducer is a resistive shunt having a resistor connected in parallel with an analog to digital converter, the analog to digital converter providing the feedback signal.

3. A cook top comprising,
a heater;
a temperature controller connected to a voltage supply and having a first temperature controller output connected to a first end of the heater and a second temperature controller output; and
a current transducer connected to the temperature controller by a feedback connection, the current transducer having a first end connected to a second end of the heater, and a second end connected to the second temperature controller output.

4. The cook top according to claim 3, wherein the current transducer is a resistive shunt having a resistor connected in parallel with an analog to digital converter, the analog to digital converter providing a feedback signal to the temperature controller over the feedback connection.

5. The circuit according to claim 1 or the cook top according to claim 3, wherein the heater is a fluorine or antimony doped tin dioxide thin film.

6. The circuit according to claim 1 or the cook top according to claim 3, wherein an optical coupler is connected between the analog to digital converter and the temperature controller for galvanically isolating the temperature controller.

7. The circuit according to claim 1 or the cook top according to claim 3, wherein the current transducer is a current transformer.

8. The circuit according to claim 1 or the cook top according to claim 3, wherein the heater is secured to a glass ceramic surface.

9. A method of controlling a heater temperature comprising the steps of,
supplying power from a temperature controller to the heater;
monitoring the current drawn by the heater and producing a corresponding feedback signal indicative of the temperature of the heater; and
varying the power supplied to the heater based on the feedback signal.

10. The method according the claim 9, further comprising the step of limiting the temperature of the heater.

11. The method according to claim 10, wherein the temperature of the heater is limited to 375° C.

12. The method according to claim 9, wherein the power supplied to the heater is varied using pulse width modulation.
